(19) Europäisches Patentamt / European Patent Office / Office européen des brevets

(11) **EP 3 812 431 A1**

(12) **EUROPEAN PATENT APPLICATION**
published in accordance with Art. 153(4) EPC

(43) Date of publication:
**28.04.2021 Bulletin 2021/17**

(51) Int Cl.:
**C09D 13/00** (2006.01)      **B43K 19/02** (2006.01)

(21) Application number: **19826821.1**

(86) International application number:
**PCT/JP2019/025168**

(22) Date of filing: **25.06.2019**

(87) International publication number:
**WO 2020/004390 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.06.2018   JP 2018120268**

(71) Applicant: **Mitsubishi Pencil Company, Limited Tokyo 140-8537 (JP)**

(72) Inventors:
• **KUBO, Ryota**
  **Fujioka-shi, Gunma 375-8501 (JP)**
• **BANZAI, Satoru**
  **Fujioka-shi, Gunma 375-8501 (JP)**

(74) Representative: **Vossius & Partner Patentanwälte Rechtsanwälte mbB Siebertstrasse 3 81675 München (DE)**

(54) **NON-CALCINED PENCIL LEAD**

(57) A non-baked pencil lead contains a colorant, a filler, a resin, and cellulose nanofibers.

**Description**

TECHNICAL FIELD

The present invention relates to a pencil lead.

BACKGROUND ART

Heretofore, there have been many attempts to improve bending strength and the like of non-baked pencil lead by adding various fibrous substances to the cores.

For example, conventional technologies employing materials with high stiffness have been disclosed, including a technology in which gypsum whiskers are added (Japanese Patent Application Publication (JP-B) No. S62-025195), a technology employing a fibrous inorganic material (JP-B No. H7-094632), and a technology employing titanium dioxide whiskers (Japanese Patent Application Laid-Open (JP-A) No. H10-330679). Conventional technologies employing materials considered to be flexible have also been disclosed, including a color pencil lead composition containing a fibrillatable polymer (Japanese Patent Application National Publication No. 2002-519469). Further conventional technologies employing cellulose have been disclosed, including a solid drawing material containing cellulose powder (JP-A No. H5-311107), a non-baked pencil lead containing ammonium carboxymethyl cellulose (JP-A No. H11-335617), and a crayon containing a cellulose resin such as acetyl cellulose (JP-A No. 2006-274246).

SUMMARY OF INVENTION

TECHNICAL PROBLEM

An object of embodiments of the present disclosure is to provide a non-baked pencil lead that, due to containing cellulose nanofibers as a fibrous substance, is high in strength, excellent in eraser erasability of drawn lines, and excellent in formability during fabrication.

SOLUTION TO PROBLEM

In consideration of the object described above, a first embodiment of the present disclosure includes a colorant, a filler, a resin, and cellulose nanofibers.

A second embodiment of the present disclosure, in addition to the characteristics of the first embodiment, contains 0.1 to 9.0% by weight of the cellulose nanofibers.

In a third embodiment of the present disclosure, in addition to the characteristics of the first or second embodiment, the resin is a water-soluble resin.

ADVANTAGEOUS EFFECTS OF INVENTION

According to the structures of the embodiments described above, because cellulose nanofibers that are a fibrous substance are included, a non-baked pencil lead with high strength, excellent eraser erasability of drawn lines, and excellent formability during fabrication may be provided.

DETAILED DESCRIPTION

Exemplary embodiments of the present disclosure include a colorant, a filler, a resin, and cellulose nanofibers.

The meaning of the term "colorant" as used herein is intended to include a substance used to make a non-baked pencil lead a colored core; various pigments and dyes are applicable.

The meaning of the term "filler" as used herein is intended to include a component principally responsible for hardness and smoothness of the non-baked pencil lead. For example, a talc, boron nitride, titanium nitride, calcium carbonate, kaolin, precipitated barium sulfate, mica, potassium titanate, sericite, pyroferrite, montmorillonite, smectite, titanium dioxide, gypsum or the like may be employed.

The meaning of the term "resin" as used herein is intended to include a resin component that acts as a binder for the respective materials and is added principally to provide toughness. Examples of resins that may be employed include cellulose derivative resins such as carboxymethyl cellulose, methyl cellulose, ethyl cellulose, ethyl cellulose acetate and the like, pullulan, polyvinyl butyral resins, polyvinyl alcohol resins, polymethyl methacrylate resins, tragacanth gum, gum arabic, dammar gum, methacrylic resins and so forth. A resin that may be employed can be synthetic or natural, and dissolves in water or dissolves in an organic solvent that mixes with water. Of these resins, because cellulose nanofibers are water-dispersible, water-soluble resins are most desirable with regard to stability.

The meaning of the term "cellulose nanofibers" as used herein is intended to include, of cellulose microfibrils which are bundles that form plant cell walls (nanocellulose), cellulose nanofibers with thicknesses of 4-100 nm and thicknesses of at least 5 μm, a raw material of which is a wood or the like. These cellulose nanofibers are advantageous in light weight and high strength.

When these cellulose nanofibers are added to the composition of a non-baked pencil lead, they do not adversely affect formability, an improvement in erasability is apparent, and formability is not adversely affected.

An inclusion amount of the cellulose nanofibers, proportional to the whole of the non-baked pencil lead, that is less than 0.1% by weight may not improve bending strength and erasability, and an inclusion amount of more than 9.0% by weight may cause problems with formability. Therefore, an inclusion amount from 0.1 to 9.0% by weight is desirable.

EXAMPLE

Non-baked pencil lead according to Examples and Comparative Examples were obtained by the respective blending compositions and fabrication methods illustrated below. The blending ratios of components that are shown below are relative parts-by-weight values of solid matter weights; the totals do not necessarily come to 100. Values of the blending ratios of the components converted to percentages (wt%) are shown in parentheses.

- Example 1 -

Red pigment powder (Pigment Red 254, colorant): 10 parts by weight (10.5 wt%)
Talc (filler): 80 parts by weight (84.1 wt%)
Carboxymethyl cellulose resin (resin): 5 parts by weight (5.3 wt%)
Cellulose nanofibers: 0.1 parts by weight (0.1 wt%)
The above-mentioned cellulose nanofibers have average fiber diameters of 10-50 nm.
An equivalent amount by weight of water was added to the blending composition described above and mixed by a planetary mixer. Then, the water content was adjusted during kneading by twin rollers. The mixture was formed into a narrow linear shape by a hydraulic plunger-type extruder, and then dried for 15 hours at 80°C to remove the water content, providing a red pencil lead porous body with a diameter of 2.0 mm. The red pencil lead porous body was immersed in dimethyl silicone oil at 120°C and the dimethyl silicone oil was allowed to impregnate into the pores in the porous body, providing a red pencil lead serving as a non-baked pencil lead.

- Example 2 -

Red pigment powder (Pigment Red 254, colorant): 10 parts by weight (10.4 wt%)
Talc (filler): 80 parts by weight (83.3 wt%)
Carboxymethyl cellulose resin (resin): 5 parts by weight (5.2 wt%)
Cellulose nanofibers: 1 part by weight (1.0 wt%)
The blending composition described above was processed by the same fabrication method as in Example 1, providing a red pencil lead serving as a non-baked pencil lead.

- Example 3 -

Red pigment powder (Pigment Red 254, colorant): 10 parts by weight (10.0 wt%)
Talc (filler): 80 parts by weight (80.0 wt%)
Carboxymethyl cellulose resin (resin): 5 parts by weight (5.0 wt%)
Cellulose nanofibers: 5 parts by weight (5.0 wt%)
The blending composition described above was processed by the same fabrication method as in Example 1, providing a red pencil lead serving as a non-baked pencil lead.

- Example 4 -

Red pigment powder (Pigment Red 254, colorant): 10 parts by weight (9.5 wt%)
Talc (filler): 80 parts by weight (76.2 wt%)
Carboxymethyl cellulose resin (resin): 5 parts by weight (4.8 wt%)
Cellulose nanofibers: 10 parts by weight (9.5 wt%)
The blending composition described above was processed by the same fabrication method as in Example 1, providing a red pencil lead serving as a non-baked pencil lead.

- Example 5 -

Red pigment powder (Pigment Red 254, colorant): 10 parts by weight (10.4 wt%)
Talc (filler): 80 parts by weight (83.3 wt%)
Polyvinyl butyral resin (resin): 5 parts by weight (5.2 wt%)
Cellulose nanofibers: 1 part by weight (1.0 wt%)
The blending composition described above was processed in the same way as in Example 1 except: propylene glycol monomethylether and water were mixed in a weight ratio of 1:1, and an equivalent amount by weight of this liquid was added to the described blending composition; and the temperature of the drying was 150°C. Thus, a red pencil lead porous body with a diameter of 2.0 mm was provided. Dimethyl silicone oil at 120°C impregnated into the porous body, providing a red pencil lead serving as a non-baked pencil lead.

- Example 6 -

Red pigment powder (Pigment Red 254, colorant): 10 parts by weight (10.4 wt%)
Talc (filler): 70 parts by weight (72.9 wt%)
Boron nitride (filler): 10 parts by weight (10.4 wt%)
Carboxymethyl cellulose (resin): 5 parts by weight (5.2 wt%)
Cellulose nanofibers: 1 part by weight (1.0 wt%)
The blending composition described above was processed by the same fabrication method as in Example 1, providing a red pencil lead serving as a non-baked pencil lead.

- Example 7 -

Red pigment powder (Pigment Red 254, colorant): 10 parts by weight (9.9 wt%)
Talc (filler): 80 parts by weight (79.2 wt%)
Polyvinyl alcohol (resin): 10 parts by weight (9.9 wt%)
Cellulose nanofibers: 1 part by weight (1.0 wt%)
The blending composition described above was processed by the same fabrication method as in Example 1, providing a red pencil lead serving as a non-baked pencil lead.

- Comparative Example 1 -

Red pigment powder (Pigment Red 254, colorant): 10 parts by weight (10.5 wt%)
Talc (filler): 80 parts by weight (84.2 wt%)
Carboxymethyl cellulose resin (resin): 5 parts by weight (5.3 wt%)
The blending composition described above was processed by the same fabrication method as in Example 1, providing a red pencil lead serving as a non-baked pencil lead.

- Comparative Example 2 -

Red pigment powder (Pigment Red 254, colorant): 10 parts by weight (10.5 wt%)
Talc (filler): 80 parts by weight (84.2 wt%)
Polyvinyl butyral resin (resin): 5 parts by weight (5.3 wt%)
The blending composition described above was processed by the same fabrication method as in Example 5, providing a red pencil lead serving as a non-baked pencil lead.

- Testing Processes -

Bending strength, formability, and erasability of the non-baked pencil lead according to the Examples and Comparative Examples obtained as described above were evaluated by the testing processes described below.

- Bending strength measurement test -

The bending strengths of ten each of the non-baked pencil lead according to the Examples and Comparative Examples described above were tested in accordance with JIS S 6005:2007, and respective mean values of bending strength were obtained. That is, using a TENSILON universal material testing instrument (RTC-1150A from ORIENTEC CO., LTD.), each non-baked pencil lead was supported with a spacing between support points of 40 mm, and a load on a central portion of the non-baked pencil lead was increased at 20 mm/minute. A load when the non-baked pencil lead broke (F, measured in N) was measured, and the bending strength (σ, measured in MPa) was calculated by the following expression. Shapes (radiuses R) of a tip applying the load and tips at the support points were R = 0.2±0.02 mm.

$$\sigma = 8Fl/\pi d^3$$

In this expression, the symbol 1 represents the distance (mm) between the support points, which was 40 mm, and the symbol d represents the diameter (mm) of the non-baked pencil lead, which was 2.0 mm.

- Formability evaluation test -

The condition of the surface after the forming of each of the Examples and Comparative Examples described above was visually inspected and evaluated as follows.

A: The surface is smooth.
B: Irregularities in the surface can be seen.
C: The surface is splintered and rough.

- Eraser erasability measurement test -

With the non-baked pencil lead according to each of the Examples and Comparative Examples described above, lines were drawn in accordance with a writing density test stipulated in JIS S 6005:2007. Specifically, each non-baked pencil lead was set in a line-drawing machine and a line was drawn on Kent paper with a base weight of 128±5 g/m$^2$, with a writing load of 2.94 N (300 g weight), a writing angle of 75°, a writing speed of 50 mm/s, and a writing length of 6 m. The drawn line was first measured with a densitometer (PDA-65 from Konica Minolta, Inc.) to obtain a value of line density before erasure (Do). A load of 11.76 N (1200 g weight) was applied to the line by an eraser piece and the line was rubbed for four reciprocating passes. Then the drawn line was measured with the densitometer to obtain a value of line density after erasure (Di). An erasure ratio ($E_R$) was obtained by the following expression.

$$E_R\ (\%) = (D_0 - D_1)/D_0 \times 100$$

- Test Results -

The results of the tests described above are shown below in Table 1. In Table 1, CMC, PVA, PVB and CNF are abbreviations for, respectively, carboxymethyl cellulose resin, polyvinyl alcohol resin, polyvinyl butyral resin and cellulose nanofibers.

Table 1

| Example/ Comparative Example | Resin | CNF inclusion amount (wt%) | Bending strength (MPa) | Formability | Eraser erasability (%) |
|---|---|---|---|---|---|
| Example 1 | CMC | 0.1 | 32 | A | 90 |
| Example 2 | CMC | 1.0 | 35 | A | 92 |
| Example 3 | CMC | 5.0 | 34 | A | 93 |
| Example 4 | CMC | 9.5 | 31 | B | 92 |
| Comparative Example 1 | CMC | - | 30 | A | 87 |
| Example 5 | PVB | 1.0 | 32 | A | 86 |
| Comparative Example 2 | PVB | - | 30 | C | 80 |
| Example 6 | CMC | 1.0 | 34 | A | 92 |
| Example 7 | PVA | 1.0 | 30 | A | 84 |

Examples 1 to 4, which contained carboxymethyl cellulose resin as the resin and contained cellulose nanofibers, showed improved bending strength and eraser erasability compared to Comparative Example 1, which contained the same resin but did not contain cellulose nanofibers.

Example 5, which contained polyvinyl butyral resin as the resin and contained cellulose nanofibers, showed improved bending strength, formability and eraser erasability compared to Comparative Example 2, which contained the same resin but did not contain cellulose nanofibers. In particular, while the formability of Comparative Example 2 was inferior at "C", Example 5, in which 1 wt% of cellulose nanofibers was included in the same composition, showed remarkable improvement with a formability of "A".

In Example 6, some of the talc employed as the filler in Example 2 was replaced with boron nitride. Example 7 employed polyvinyl alcohol in place of the polyvinyl butyral employed as the resin in Example 5. Example 6 and Example 7 each compared well with, respectively, Example 2 and Example 5, showing excellent bending strength and eraser erasability.

From the above, it can be seen that bending strength and eraser erasability of a non-baked pencil lead are improved by the addition of cellulose nanofibers. It can also be seen that the addition of cellulose nanofibers contributes to an improvement in formability relative to non-baked pencil lead compositions with inferior formability.

Of Examples 1 to 4, Example 4 with a cellulose nanofiber inclusion amount of 9.5 wt% had somewhat inferior formability compared to Examples 1 to 3 with lower inclusion amounts. Therefore, with consideration for formability, it is desirable if an inclusion amount of cellulose nanofibers is at least 0.1% by weight and less than 9.5% by weight (more specifically, at most 9.0% by weight).

INDUSTRIAL APPLICABILITY

The present invention is applicable to a pencil lead.

**Claims**

1. A non-baked pencil lead comprising a colorant, a filler, a resin, and cellulose nanofibers.

2. The non-baked pencil lead according to claim 1, wherein the non-baked pencil lead contains 0.1 to 9.0% by weight of the cellulose nanofibers.

3. The non-baked pencil lead according to claim 1 or claim 2, wherein the resin is a water-soluble resin.

## INTERNATIONAL SEARCH REPORT

| | International application No. |
|---|---|
| | PCT/JP2019/025168 |

**A. CLASSIFICATION OF SUBJECT MATTER**
Int.Cl. C09D13/00(2006.01)i, B43K19/02(2006.01)i

According to International Patent Classification (IPC) or to both national classification and IPC

**B. FIELDS SEARCHED**

Minimum documentation searched (classification system followed by classification symbols)
Int.Cl. C09D13/00, B43K19/02

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 5-311107 A (BUNCHO CO., LTD.) 22 November 1993 (Family: none) | 1-3 |
| A | JP 11-335617 A (SAKURA COLOR PRODUCTS CORPORATION) 07 December 1999 & US 2002/0139278 A1 & EP 1000987 A1 & KR 10-2001-0022351 A | 1-3 |
| A | JP 2006-274246 A (SAKURA COLOR PRODUCTS CORPORATION) 12 October 2006 (Family: none) | 1-3 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 02 August 2019 (02.08.2019) | 20 August 2019 (20.08.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2019/025168 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 55-29511 A (PILOT PRECISION CO., LTD.) 01 March 1980 (Family: none) | 1-3 |
| A | JP 2015-209506 A (MITSUBISHI PENCIL CO., LTD.) 24 November 2015 & US 2017/0051173 A1 & EP 3138884 A1 | 1-3 |
| E, X | JP 2019-116534 A (PILOT CORPORATION) 18 July 2019, claims, paragraphs [0012]-[0019], examples 1-20 (Family: none) | 1-3 |

Form PCT/ISA/210 (continuation of second sheet) (January 2015)

**EP 3 812 431 A1**

**Patent documents cited in the description**

- JP S62025195 B
- JP H7094632 B
- JP H10330679 A
- JP 2002519469 A
- JP H5311107 A
- JP H11335617 A
- JP 2006274246 A